# EUROPÄISCHE PATENTANMELDUNG

(11) **EP 4 275 471 A1**
(43) Veröffentlichungstag der Anmeldung: **15.11.2023**
(21) Anmeldenummer: 23172108.5
(22) Anmeldetag: 08.05.2023
(51) Int. Cl.: A01D 34/00

(54) **INTELLIGENTE ZEITSTEUERUNG VON ARBEITSGERÄTEN FÜR RASENFLÄCHEN**

(30) Priorität: 10.05.2022 DE 102022111644
(71) Anmelder: AL-KO Geräte GmbH, 89359 Kötz (DE)
(72) Erfinder: Trumpp, Daniel, 86420 Diedorf (DE)
(74) Vertreter: ERNICKE Patent- und Rechtsanwälte PartmbB

(57) **Zusammenfassung**

Computerimplementiertes Verfahren zur Ermittlung eines Arbeitszeitfensters (TWO) für ein mobiles Arbeitsgerät (100), vorzugsweise einen Mähroboter oder einen Rasenmäher, zur Pflege einer bestimmten Rasenfläche (300). Das Arbeitszeitfenster wird mittels einer Graswachstumssimulation unter Berücksichtigung standortbezogener Wetterdaten (WSD) ermittelt. Das ermittelte Arbeitszeitfenster (TWO) umfasst eine Startzeit (ST) und eine erwartete Arbeitsdauer (EDO), die mittels einer Arbeitsdauerschätzung (202) in Abhängigkeit von Raseneigenschaftsdaten (LCD) und in Abhängigkeit einer Flächenleistung (AOP) des Arbeitsgeräts (100) ermittelt wird.

## Beschreibung

Die Erfindung liegt auf dem Gebiet der Steuerung mobiler Arbeitsgeräte zur Pflege einer Rasenfläche. Solche Arbeitsgeräte können Mähroboter, Traktoren, Rasenmäher oder andere mobile Arbeitsgeräte im Bereich der Garten-, Agrar- und Landschaftsarbeit sein.

In der Praxis werden zur Pflege von Rasenflächen verschiedene Arten mobiler Geräte eingesetzt, insbesondere Mähroboter, Aufsitzmäher, Traktoren oder handgeschobene Rasenmäher. Zusätzlich können auch weitere Arbeitsgeräte zur Pflege des Rasens eingesetzt werden, z.B. Düngevorrichtungen, Bewässerungsvorrichtungen, Vertikutierer oder andere Geräte zur Garten- und Landschaftspflege.

Einfache Mähroboter arbeiten nach statisch vorgegebenen Mähzeiten. Diese Mähzeiten können sich nach einem vorbestimmten Zeitpunkt und regelmäßigen Wiederholungsintervallen (z.B. jeden Samstagsnachmittag mit wöchentlicher Wiederholung) oder manuellen Benutzereingaben richten. Statische Mähvorgaben haben den Nachteil, dass der tatsächliche Mähbedarf nicht berücksichtigt wird. Der Mähbedarf richtet sich insbesondere nach dem Graswachstum, den derzeitigen Umweltbedingungen (z.B. Regen), rechtlichen Vorgaben wie Ruhezeiten und Benutzervorlieben.

Der Benutzer mobiler Arbeitsgeräte zur Rasenpflege soll bei der Bedienung der Geräte so weit wie möglich entlastet werden. Insbesondere soll die Planung und zeitliche Steuerung, wann der Rasen gemäht wird, möglichst automatisiert und an die vorhandenen Gegebenheiten angepasst sein. Der Rasen soll zu einem optimalen Zeitpunkt gemäht werden.

Aus dem Stand der Technik sind hierzu verschiedene Ansätze bekannt.

EP 3 815 519 A1 offenbart ein Verfahren zur Vorhersage des Graswachstums einer bestimmten Rasenfläche unter Berücksichtigung standortbezogener Wetterinformationen. Das vorhergesagte Graswachstum kann auch zur Planung des nächsten Mäheinsatzes eines Mähroboters oder eines manuell zu bedienen Rasenmähers genutzt werden. Die Planung des Mäheinsatzes erfolgt auf Tagesbasis. Zur Bestimmung des bevorzugten nächsten Mäheinsatzes wird in Abhängigkeit der erwarteten Durchschnittstemperatur an den in naher Zukunft liegenden Tagen das erwartete Graswachstum prädiziert. Hat das Gras ein vorbestimmtes Wachstum erreicht, wird ein Mähvorgang für einen Mähroboter aktiviert.

Die vorliegende Erfindung hat die Aufgabe eine verbesserte Technik zur Planung von Arbeitseinsätzen mobiler Arbeitsgeräte im Bereich der Rasenpflege bereitzustellen. Die Erfindung löst die Aufgabe mit den Merkmalen der eigenständigen Ansprüche.

Es wird ein computerimplementiertes Verfahren, ein Computersystem zur Ausführung dieses Verfahrens sowie ein entsprechendes Computerprogramm offenbart.

Das Verfahren dient der automatisierten Ermittlung eines Arbeitszeitfensters für mindestens ein mobiles Arbeitsgerät, das zur Pflege einer bestimmten Rasenfläche eingesetzt wird. Das mobile Arbeitsgerät kann insbesondere ein Mähroboter, ein Aufsitzmäher oder ein handgeschobener Rasenmäher sein.

Das Arbeitszeitfenster wird für eine bestimmte Rasenfläche und mindestens ein bestimmtes Arbeitsgerät, z.B. einen Mähroboter, der für die Pflege dieser Rasenfläche vorgesehen ist, ermittelt. Je nach Ausführungsform kann ein einzelnes Arbeitsgerät oder eine Flotte aus Arbeitsgeräten zur Pflege der Rasenfläche vorgesehen sein.

Das Arbeitszeitfenster wird auf Basis einer Graswachstumssimulation bestimmt. Zur Schätzung des Graswachstums werden standortbezogene Wetterdaten, z.B. die erwartete Temperatur, der erwartete Niederschlag und/oder die erwartete Sonnenscheindauer, berücksichtigt. Die Wetterdaten können Wettervorhersagen und/oder Wettermessungen umfassen. Die Wetterinformationen werden für den Standort der zu pflegenden Rasenfläche bezogen. Vorzugsweise werden die Wetterdaten von einem Wetterdienst über das Internet oder einer lokalen Wetterstation bezogen. Die Wetterdaten können insbesondere durch Abfrage mit Übermittelung des Standorts der Rasenfläche bezogen werden. Der Standort der Rasenfläche kann aus einer Datenbank, mittels Ortungssensoren und/oder Benutzereingaben ermittelt werden.

Die Graswachstumssimulation umfasst ein Modell zur Berechnung des Graswachstums in einer bestimmten Zeiteinheit in Abhängigkeit der vorherrschenden Umweltbedingungen. Durch die Graswachstumssimulation kann das tatsächliche Graswachstum unter der Berücksichtigung von Wetterdaten für die Zukunft und/oder Vergangenheit geschätzt werden. Beispielsweise berücksichtigt die Graswachstumssimulation, dass Gras in Abhängigkeit der Durchschnittstemperatur schneller oder langsamer wächst. Neben den Wetterdaten können auch weitere Einflüsse auf das Graswachstum, z.B. die Rasenart (d.h. Sorte des Grases), Bodenart, Beschaffenheit des Bodens oder die Bewässerung, bei der Schätzung des Graswachstums berücksichtigt werden.

In einer besonders vorteilhaften Ausführungsform wird auch der Feuchtigkeitshaushalt des Bodens simuliert. Der simulierte Feuchtigkeitshaushalt kann als Eingangsgröße für die Simulation des Graswachstums genutzt werden. Mittels der Graswachstumssimulation lässt sich das Graswachstum computergestützt schätzen. Das geschätzte Graswachstum ist eine modellbasierte Näherung an das tatsächliche Graswachstum.

In der vorliegenden Offenbarung umfasst das Arbeitszeitfenster eine Startzeit und eine erwartete Arbeitsdauer. Die Startzeit und die erwartete Arbeitsdauer können explizit oder implizit angegeben sein. So ist es je nach Art der Implementierung möglich die Startzeit (z.B. 13.05.2022 um 15:00 Uhr) als Zeitpunkt und die erwartete Arbeitsdauer als Zeitdauer (z.B. 2 Stunden, 30 Minuten) anzugeben. Alternativ oder zusätzlich können Startzeit und erwartete Arbeitsdauer auch als Startzeitpunkt (15:00 Uhr) und erwarteter Endzeitpunkt (17:30 Uhr) des Arbeitszeitfensters angegeben werden. Technisch gleichbedeutend wäre es möglich den Endzeitpunkt und eine vorhergehende Zeitdauer für das Arbeitszeitfenster anzugeben.

Das offenbarte Verfahren nutzt bei der Planung des Mäheinsatzes nicht nur den Startzeitpunkt, sondern auch die Dauer des Mäheinsatzes.

Die erwartete Arbeitsdauer wird unter Berücksichtigung der Eigenschaften der zu bearbeitenden Rasenfläche und der Flächenleistung des dazu eingesetzten Arbeitsgeräts bestimmt. Durch die Berücksichtigung des Arbeitsaufwands und der Arbeitsleistung kann die tatsächlich benötigte Dauer des Arbeitseinsatzes angenähert und bei der Planung im Vorhinein berücksichtigt werden. Dies ist besonders vorteilhaft, da die Dauer des Arbeitseinsatzes je nach Rasenfläche und Leistungsfähigkeit des Arbeitsgeräts stark variieren kann. Die Variationen können bei der Planung berücksichtigt werden, um die Planungskriterien einzuhalten.

Zur Bestimmung der erwarteten Arbeitsdauer werden Raseneigenschaftsdaten verarbeitet. Die Raseneigenschaftsdaten können insbesondere Angaben über die Fläche (z.B. in Quadratmetern) oder die Topografie des Rasens umfassen. Aus den Raseneigenschaftsdaten kann der Arbeitsaufwand ermittelt werden.

Bei der Bestimmung der erwarteten Arbeitsdauer wird außerdem die Flächenleistung des eingesetzten Arbeitsgeräts verarbeitet. Die Flächenleistung umfasst Informationen darüber, welche Fläche mit dem Arbeitsgerät in einer bestimmten Zeit bearbeitet werden kann. Je nach Art des Arbeitsgeräts können unterschiedliche Parameter zur Bestimmung der Flächenleistung ermittelt werden. Für einen Mähroboter kann beispielsweise die Geschwindigkeit und die Schnittbreite des Mähroboters ausgewertet werden, um die gemähte Fläche pro Stunde zu ermitteln. Alternativ oder zusätzlich können der Mähmodus (Mulchen, Seitenauswurf, Auffangbehälter) und der Ladezustand bzw. die Energiekapazität berücksichtigt werden. Auch die Anzahl der eingesetzten Arbeitsgeräte kann bei der Arbeitsdauerschätzung berücksichtigt werden. Im Falle handbedienter Rasenmäher kann die Flächenleistung auch von einem oder mehreren Angaben über die Leistungsfähigkeit und/oder die Gewohnheiten des Bedieners abhängen.

Die Arbeitsdauerschätzung kann je nach Ausführungsform einen oder mehrere Flächenleistungsparameter, z.B. aus Benutzereingabedaten, Gerätekonfigurationsdaten und/oder Raseneigenschaftsdaten, verarbeiten. Die Flächenleistungsparameter können direkt aus einer externen Quelle bezogen werden und/oder in einem Vorverarbeitungsschritt durch die Arbeitsdauerschätzung ermittelt werden.

Die Flächenleistung kann insbesondere aus einer oder mehreren Kombinationen der folgenden Informationen bestimmt werden: Gerätekategorie, Mähstrategie, Schnittbreite, Arbeitsgeschwindigkeit, Speichervolumen des Auffangbehälters, Wendedauer, Energiekapazität, Ladezustand, verfügbare Mähmodi, gewählter Mähmodus, Benutzergeschwindigkeit, Rasenflächenform, Rasensteigung, Rasentopografie.

Die Energiekapazität und der Ladezustand können je nach Art des Arbeitsgeräts sowohl die Kapazität und Ladezustand eines elektrischen Akkus als auch die Kapazität und den Füllstand eines Tanks (z.B. für Rasenmäher mit Verbrennungsmotor) umfassen.

Die Startzeit des Arbeitszeitfensters wird vorzugsweise in Abhängigkeit des geschätzten Graswachstums seit einem vorangegangenen Mäheinsatz ermittelt. Mittels der Graswachstumssimulation lässt sich das Graswachstum seit dem letzten Mähen schätzen. Wird ein bestimmtes Wachstum erreicht, kann der nächste Mäheinsatz geplant werden.

In einer vorteilhaften Ausführungsform werden historische Mähdaten verarbeitet, die Informationen darüber enthalten, wann die Rasenfläche zum letzten Mal gemäht wurde.

Vorzugsweise wird ein frühester Mähzeitpunkt bestimmt. Zur Bestimmung des frühesten Mähzeitpunkts wird das geschätzte Graswachstum zeitlich aggregiert, d.h. integriert und/oder summiert. Die Startzeit wird vorzugsweise so gewählt, dass diese nach dem frühesten Mähzeitpunkt liegt. Der früheste Mähzeitpunkt wird vorteilhafterweise durch Vergleich des geschätzten Graswachstums mit einem Schwellgraswachstum bestimmt. Beispielsweise kann der Benutzer ein maximales Graswachstum (z.B. 2,5 cm) als Schwellwachstum vorgeben. Sobald das auf Basis der Graswachstumssimulation und der Wetterdaten geschätzte Graswachstum in der zeitlich aggregierten Summe diesen Wert erreicht oder überschreitet, kann der nächste Mäheinsatz durchgeführt werden.

In einer bevorzugten Ausführungsform wird das Arbeitszeitfenster mittels einer Mähzeitplanung in Abhängigkeit der erwarteten Arbeitsdauer und der unter Berücksichtigung von Ausschlusszeiten geplant. Die Mähzeitplanung umfasst die explizite oder implizite Festlegung des Arbeitszeitfensters durch Startzeitpunkt und Dauer. Die Mähzeitplanung erfolgt vorzugsweise unter Ausschluss bestimmter Zeiten, in denen nicht gemäht werden soll. Ausschlusszeiten können sowohl statisch vorgegebene als auch dynamisch bestimmte Zeiträume sein. Durch die Bestimmung der erwarteten Arbeitsdauer kann bei der Mähzeitplanung sichergestellt werden, dass sich das Mähzeitfenster nicht mit Ausschlusszeiten überschneidet.

Ausschlusszeiten können beispielsweise durch den Benutzer nach dessen Vorliebe vorgegeben werden. So kann der Benutzer beispielsweise wählen, dass an bestimmten Wochentagen oder zu bestimmten Uhrzeiten nicht gemäht werden soll. Alternativ oder zusätzlich kann der Sonnenzyklus als Ausschlusskriterium verwendet werden, d.h. dass eine gewisse Zeit nach oder genau ab Sonnenuntergang bis zu einer gewissen Zeit vor oder genau bis Sonnenaufgang nicht gemäht werden darf. Alternativ oder zusätzlich können aus einem Kalenderdienst Feiertage oder Ruhetage berücksichtigt werden, insbesondere unter Berücksichtigung des Standorts. Alternativ oder zusätzlich können Regenzeiten oder Ruhezeiten als dynamische Ausschlusszeiten bestimmt werden.

Mittels des hier offenbarten Verfahrens lässt sich der Mäheinsatz im Vergleich zum Stand der Technik präziser und unter besserer Berücksichtigung der Rahmenbedingungen planen.

In einer besonders vorteilhaften Ausführungsform wird das Gaswachstum mit einer zeitlichen Auflösung von mehreren Einzelschätzperioden je Tag geschätzt. Eine Einzelschätzperiode ist ein Zeitintervall, für das Graswachstum mittels der Graswachstumssimulation bestimmt wird. Da die Umweltbedingungen und das Graswachstum im Tagesverlauf variieren können, ist es vorteilhaft das Graswachstum auf Basis kleinerer Zeiteinheiten (z.B. in Einzelschätzintervallen von einer Stunde, mehreren Stunden oder sogar unter einer Stunde) zu schätzen. So lässt sich das Erreichen des Schwellgraswachstums präziser (z.B. auch innerhalb eines Tages) und korrekter (durch Berücksichtigung der genauen Umgebungsbedingungen zu jeder Einzelschätzperiode) vorhersagen. Das Arbeitszeitfenster für den nächsten Mäheinsatz kann entsprechend auch präziser geplant werden.

Die Offenbarung umfasst insbesondere eine Ausführungsform, bei der das Graswachstum mit einer zeitlichen Auflösung von mehreren Einzelschätzperioden je Tag geschätzt wird.

Die Offenbarung umfasst außerdem eine Ausführungsform, bei der die Einzelschätzperioden unterschiedliche zeitliche Dauern, insbesondere eine oder mehrere Stunden oder einen ganzen Tag, umfassen. Die Dauer der jeweiligen Einzelschätzperiode kann alternativ oder zusätzlich von deren zeitlichen Entfernung in der Zukunft und/oder der zeitlichen Bezugsperiode der darin verarbeiteten Wetterdaten abhängen.

Bei der Bestimmung des Arbeitszeitfensters und/oder der Mähzeitplanung werden vorzugsweise historische Mähdaten, Benutzereingabedaten, Produktkonfigurationsdaten, Raseneigenschaftsdaten, Wetterdaten und/oder Kalenderdaten verarbeitet.

Die Eingangsdaten können in den verschiedenen Ausführungsformen der Erfindung aus unterschiedlichen Quellen stammen.

Insbesondere können die Daten (z.B. Gerätetyp, Ladezustand, Mähgeschwindigkeit, Schnittbreite, etc.) vom mobilen Arbeitsgerät stammen. Die Daten können insbesondere über eine Internetverbindung direkt mit dem mobilen Arbeitsgerät ausgetauscht werden oder über eine Schnittstelle indirekt bezogen werden. Vorteilhafterweise werden Zustandsdaten des mobilen Arbeitsgeräts in regelmäßigen Zeitabständen zwischengespeichert.

Alternativ oder zusätzlich können die Eingangsdaten aus einer Datenbank stammen. Beispielsweise kann das eingesetzte Computersystem eine Datenbank mit Daten der eingesetzten Arbeitsgeräte und/oder der zu pflegenden Rasenfläche(n) umfassen. Alternativ oder zusätzlich können in der Datenbank Eingangsdaten (z.B. Gerätekonfigurationsdaten, historische Mähdaten, Benutzereingabedaten, etc.) zwischengespeichert werden.

Alternativ oder zusätzlich können Daten von Sensorsystemen in der Umgebung der Rasenfläche bezogen werden. Beispielsweise können Daten vernetzter Bewässerungssysteme berücksichtigt werden.

Die Offenbarung umfasst mehrere Ausführungsformen hinsichtlich der Nutzung der ermittelten Arbeitszeitfenster zur Ansteuerung der mobilen Arbeitsgeräte. Die Offenbarung ist besonders geeignet für die automatisierte Steuerung von Mährobotern. Alternativ oder zusätzlich kann das Arbeitszeitfenster für manuell bediente Arbeitsgeräte (z.B. Aufsitzmäher, Traktoren oder Rasenmäher) über eine Benachrichtigung auf einer Benutzerschnittstelle (z.B. auf einem Smartphone) ausgegeben werden.

In einer besonders vorteilhaften Ausführungsform werden Arbeitszeitfenster für mehrere Arbeitsgeräte in einer Flotte ermittelt. Vorzugsweise werden die Arbeiten und damit verbundenen Arbeitsdauern zwischen den eingesetzten Arbeitsgeräten koordiniert.

In einer weiteren Ausführungsform kann das Arbeitszeitfenster mit einer oder mehreren Unterbrechungen geplant werden. Vorzugsweise werden hierbei Benutzervorgaben und Ausschlusszeiten berücksichtigt.

Weitere vorteilhafte Merkmale und Ausführungsformen der Erfindung werden nachfolgend anhand der Zeichnungen beschrieben. Die Erfindung ist nicht auf die in Zeichnungen dargestellten Merkmalskombinationen beschränkt. Vielmehr können die offenbarten Merkmale auch in weiteren hiermit offenbarten Ausführungsformen miteinander kombiniert, ersetzt oder weggelassen werden.

Die Erfindung ist in den Zeichnungen beispielhaft und schematisch dargestellt.

### Liste der Figuren:

- Figur 1:: Ein Blockdiagramm zur Ermittlung und Verarbeitung eines Arbeitszeitfenster (TWO);
- Figur 2:: Eine Kalenderansicht mehrerer Tage (d1, d2, d3, d7) mit mehreren Ausschlusszeiten (ET) und einem geplanten Arbeitszeitfenster (TWO) mit einer Startzeit (ST) und einer erwarteten Arbeitsdauer (EDO);
- Figur 3:: Ein Blockdiagram einer vorteilhaften Ausführungsform zur Ermittlung eines Arbeitszeitfenster (TWO);
- Figur 4:: Eine zu pflegende Rasenfläche (300) mit einer zu mähenden Rasenfläche (a) und einem mobilen Arbeitsgerät (100).

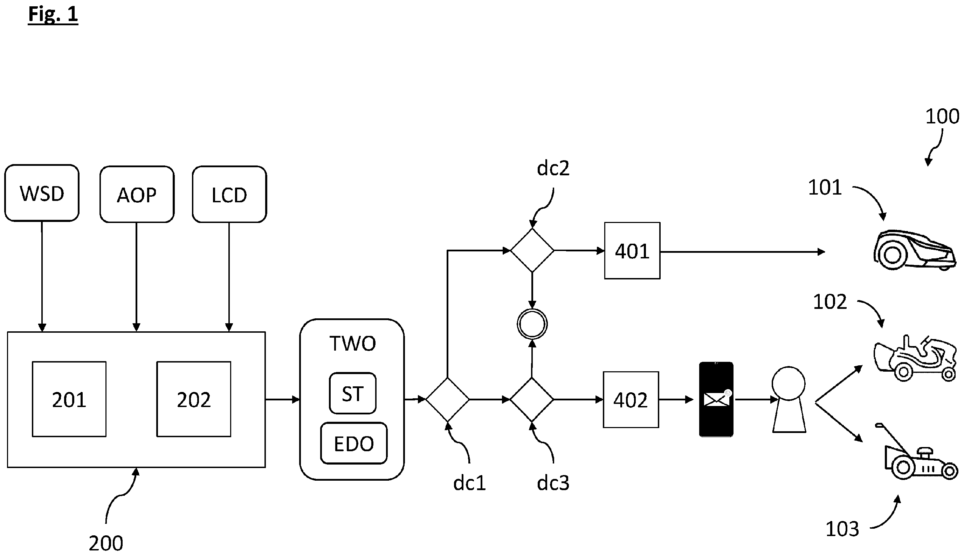

Figur 1 zeigt eine beispielhafte Ausführung des Verfahrens zur Bestimmung eines Arbeitszeitfenster (TWO) mit einer Startzeit (ST) und einer erwarteten Arbeitsdauer (EDO).

Im Rahmen der Arbeitszeitfensterbestimmung (200) werden mehrere Eingangsdaten verarbeitet. In der abgebildeten Ausführungsform werden Wetterdaten (WSD), Angaben zur Flächenleistung (AOP) und Raseneigenschaftsdaten verarbeitet.

Mittels einer Graswachstumssimulation (201) wird das Graswachstum geschätzt. Mittels der Arbeitsdauerschätzung wird die erwartete Arbeitsdauer (EDO) ermittelt.

Die Startzeit (ST) kann in Abhängigkeit des aggregierten Graswachstums bestimmt werden. Sobald das Graswachstum einen bestimmten Schwellwert erreicht hat, kann der nächste Mäheinsatz erfolgen.

Das automatisiert ermittelte Arbeitszeitfenster (TWO) kann zur direkten oder indirekten Steuerung eines mobilen Arbeitsgeräts (100) verwendet werden. Vorteilhafterweise kann das Verfahren sowohl für autonome Arbeitsgeräte wie bspw. Mähroboter (101) oder benutzergesteuerte Arbeitsgeräte wie Aufsitzmäher (102) oder handgeschobener Rasenmäher (103) verwendet werden.

Vorzugsweise wird in einer ersten Entscheidung (dc1) ermittelt, ob das zu steuernde Arbeitsgerät (100) ein autonomes Gerät (d.h. direkte Ansteuerung möglich) oder ein benutzergesteuertes Gerät ist.

Für autonome Geräte wird das Arbeitszeitfenster (TWO) vorzugsweise über eine Steuerschnittstelle (401) bereitgestellt. Beispielsweise kann das Arbeitszeitfenster in einem digitalen Zwilling des Arbeitsgeräts eingespielt werden, der in Echtzeit oder in regelmäßigen Abständen (z.B. minütlich, stündlich oder einmal pro Nacht) mit dem Arbeitsgerät synchronisiert wird. Alternativ oder zusätzlich können Zustandsdaten des Arbeitsgeräts (z.B. Gerätekonfigurationsdaten) über die Steuerschnittstelle (401) von dem Arbeitsgerät bezogen werden. Die Steuerschnittstelle (401) kommuniziert vorzugsweise über das Internet mit einem oder mehreren mobilen Arbeitsgeräten (100). Je nach Ausführungsform kann die Kommunikation mit dem Arbeitsgerät auch über eine intermediäre Kommunikationseinheit (z.B. in der Ladestation des Mähroboters) erfolgen.
In einer vorteilhaften Ausführungsform wird das ermittelte Arbeitszeitfenster (TWO) erst am Tag der Ausführung zur Ansteuerung des Mähroboters übertragen. In einer Entscheidung (dc2) wird geprüft, ob das Arbeitszeitfenster (TWO) mit dem derzeitigen Datum übereinstimmt oder ein anderes Zeitkriterium erfüllt ist (z.B. Startzeit in weniger als 36 Stunden). Steht das Arbeitszeitfenster (TWO) zeitnah bevor, wird dieses zur Ansteuerung des Arbeitsgeräts (100) übertragen. Falls das Arbeitszeitfenster erst in entfernterer Zukunft beginnt, kann dieses vorerst verworfen werden.

Wird ein Arbeitszeitfenster (TWO) für ein benutzergeführtes Arbeitsgerät, z.B. einen Aufsitzmäher (102) oder einen handgeschobenen Rasenmäher (103), ermittelt, wird dieses vorzugsweise als Benachrichtigung an den Benutzer ausgegeben. In einer vorteilhaften Ausführungsform wird bei der Erzeugung einer Benachrichtigung eine Vorankündigungszeit berücksichtigt. Die Vorankündigungszeit kann vorbestimmt oder vom Benutzer konfigurierbar sein. Vorteilhafterweise wird in einer Entscheidung (dc3) geprüft, ob das Arbeitszeitfenster innerhalb der Vorankündigungszeit (z.B. Benachrichtigung erst 3 Tage vor Start des Arbeitszeitfensters) liegt. Ist dies der Fall, so wird eine Benachrichtigung erzeugt. Die Benachrichtigung wird vorzugsweise über eine Nachrichtenschnittstelle (402) bereitgestellt. Die Benachrichtigung kann insbesondere als Push-Nachricht auf einem Smartphone des Benutzers ausgegeben werden. Über die Nachrichtenschnittstelle (402) können neben den Benachrichtigungen auch weitere Daten (z.B. Benutzereingabedaten) mit einem Smartphone des Benutzers oder einer anderen Benutzerschnittstelle ausgetauscht werden.

Der Benutzer erhält über eine Benachrichtigung, wann die Rasenfläche gemäht werden sollte. Alternativ oder zusätzlich können dem Benutzer auch weitere Pflegehinweise (z.B. zur Düngung oder Bewässerung) als Benachrichtigung mitgeteilt werden. In einer vorteilhaften Ausführungsform werden dem Benutzer auch Benachrichtigungen über erkannte Wartungsbedarfe (z.B. Aufladen eines Akkus oder Befüllung eines Tanks) mitgeteilt.

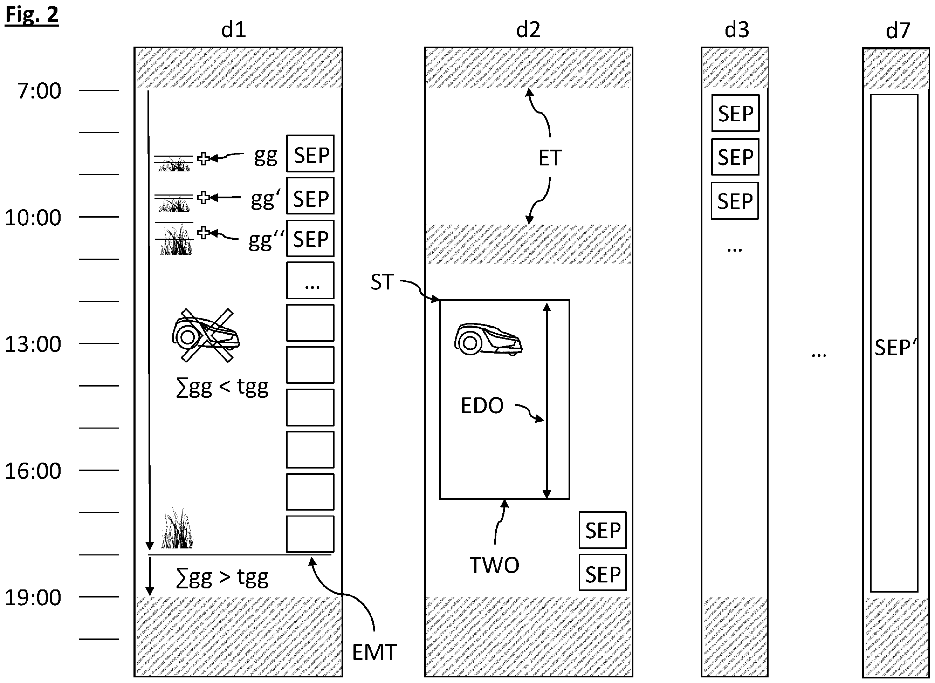

Figur 2 zeigt eine beispielhafte Planung eines Arbeitszeitfensters (TWO) mit einer Startzeit (ST) und einer erwarteten Arbeitsdauer (EDO). Es werden mehrere Tage (d1, d2, d3, d7) dargestellt, die aufeinanderfolgende Tage in der Zukunft darstellen. Für jeden Tag sind in einer kalenderähnlichen Darstellung Zeiträume von ca. 7:00 bis 19:00 dargestellt.

Mittels der Graswachstumssimulation (201) wird das Graswachstum (gg, gg', gg") geschätzt. Vorteilhafterweise wird das Graswachstum seit dem letzten Mähvorgang durch Aggregation der Graswachstumsschätzungen für eine Vielzahl von Einzelschätzperioden geschätzt.

In der in Figur 2 dargestellten Ausführungsform erfolgt die Graswachstumsschätzung auf Basis mehrerer Einzelschätzungsperioden (SEP) auf Stundenbasis. Vorzugsweise entspricht die zeitliche Auflösung der Einzelschätzperioden der Auflösung der bezogenen Wetterdaten (SEP). Alternativ oder zusätzlich kann das Graswachstum auf Basis anderer Zeiträume geschätzt werden.

Es ist insbesondere möglich das Graswachstum in der Vergangenheit und/oder näheren Zukunft mit einer höheren zeitlichen Auflösung zu schätzen als in der entfernteren Zukunft. In der Regel liegen Wetterdaten für die nächsten 1 - 3 Tage mit einer höheren Auflösung vor, da die Vorhersagegenauigkeit mit der Zeit abnimmt.

Die Einzelschätzperioden (SEP) können insbesondere unterschiedliche Zeitdauern umfassen. In einer möglichen Ausführungsform kann das Graswachstum in den kommenden drei Tagen (d1, d2, d3) beispielsweise auf Stundenbasis ermittelt werden. Das Graswachstum in einer Woche, d.h. an Tag 7 (d7), könnte auf Tagesbasis oder Intervallen von mehreren Stunden (SEP`) geschätzt werden.

Während das aggregierte Graswachstum (Σgg) noch unter dem vorgegebenen Schwellgraswachstum (< tgg) liegt, soll noch nicht gemäht werden. Überschreitet das aggregierte Graswachstum (Σgg) ein Schwellgraswachstum (> tgg), so kann dies als frühester Mähzeitpunkt (EMT) betrachtet werden.

Mittels der Mähzeitplanung (203) wird eine Startzeit (ST) für das Arbeitszeitfenster (TWO) ermittelt, die nach einem frühesten Mähzeitpunkt (EMT) liegt. Zusätzlich wird das Arbeitszeitfenster (TWO) so gewählt, dass unter Berücksichtigung der erwarteten Arbeitsdauer (EDO) Ausschlusszeiten (ET) eingehalten werden.

In dem in Figur 2 dargestellten Beispiel liegt der früheste Mähzeitpunkt (EMT) bereits an Tag 1 (d1). Für das System sind mehrere Ausschlusszeiten (ET) definiert. Im vorliegenden Beispiel soll nicht nach 19 Uhr gemäht werden. Diese Ausschlusszeit (ET) kann statisch durch den Benutzer vorgegeben werden oder dynamisch ermittelt werden, z.B. auf Basis von Wetterdaten, die Zeitpunkte für Sonnenaufgang und/oder Sonnenuntergang umfassen. So kann beispielsweise eingestellt werden, dass nur tagsüber, d.h. nach Sonnenaufgang und vor Sonnenuntergang, gemäht werden soll.

Alternativ oder zusätzlich können Ausschlusszeiten (ET) aus Benutzereingaben oder Kalenderdaten berücksichtigt werden. Im dargestellten Beispiel ist auch eine Ausschlusszeit (ET) an Tag 2 (d2) zwischen 10:00 und 11:00 Uhr definiert.

Aufgrund der Ausschlusszeiten findet das Verfahren automatisiert ein Arbeitszeitfenster (TWO), das unter Berücksichtigung der erwarteten Arbeitsdauer (EDO) keine Überschneidung mit einer Ausschlusszeit (ET) aufweist.

In einer vorteilhaften Ausführungsform können auch Regenzeiten als Ausschlusszeiten (ET) bestimmt werden. In einer besonders vorteilhaften Ausführungsform wird nach vorhergesagten Regenzeiten (z.B. an Tag 2 zwischen 10:00 und 11:00 Uhr) noch eine vorbestimmte oder dynamisch ermittelte Wartezeit (z.B. 1 Stunde bis 12:00 an Tag 2) berücksichtigt. Die Wartezeit kann insbesondere in Abhängigkeit weiterer Wetterdaten, z.B. Sonnenschein und Temperatur, ermittelt werden. Auf diese Weise kann verhindert werden, dass bei nassem Gras gemäht wird.

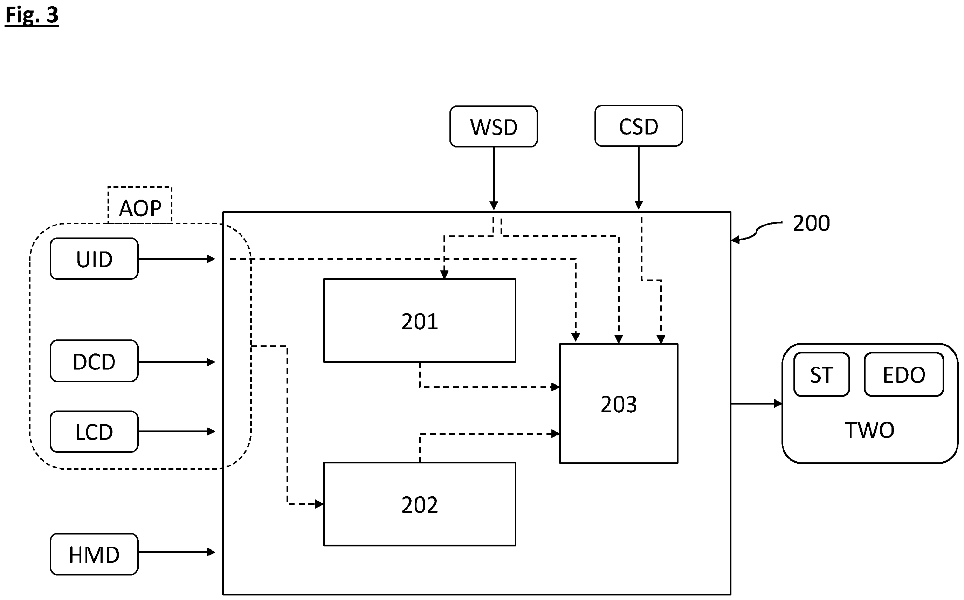

Figur 3 zeigt ein Blockschaltbild einer vorteilhaften Ausführungsform des Systems. Das Computersystem zur Arbeitszeitfensterbestimmung (200) umfasst eine Graswachstumssimulation (201), eine Arbeitsdauerschätzung (202) und eine Mähzeitplanung (203).

Das Computersystem ist dazu bestimmt ein Arbeitszeitfenster (TWO) mit einer Startzeit (ST) und einer erwarteten Arbeitsdauer (EDO) zu bestimmen.

Die Graswachstumssimulation (201) ist dazu bestimmt, das Graswachstum auf einer bestimmten Rasenfläche (300) mittels eines Modells in Abhängigkeit von Wetterdaten (WSD) zu schätzen. Die Arbeitsdauerschätzung (202) ist dazu bestimmt, für eine bestimmte Rasenfläche (300) die erwartete Arbeitsdauer (EDO) für ein oder mehrere bestimmte Arbeitsgeräte (100) zu ermitteln, wobei die Flächenleistung (AOP) der Arbeitsgeräte (100) berücksichtigt wird.

Die Flächenleistung (AOP) kann als Flächenparameter bezogen und/oder auf Basis von Benutzereingaben (UID) und/oder Gerätekonfigurationsdaten (DCD) und/oder Raseneigenschaftsdaten (LCD) bestimmt werden. Welche Parameter für die Bestimmung der Flächenleistung (AOP) verarbeitet werden, ist vorzugsweise davon abhängig, ob die erwartete Arbeitsdauer eines autonomen oder eines benutzergeführten Arbeitsgeräts ermittelt wird. Beispielsweise können für einen Mähroboter als Flächenleistungsparameter die Arbeitsgeschwindigkeit (v) und die Schnittbreite (w) zur Bestimmung der Flächenleistung (AOP) verarbeitet werden. Alternativ oder zusätzlich kann die Flächenleistung (AOP) auch aus historischen Mähdaten, abgeleitet werden. Bei der Bestimmung der Flächenleistung können insbesondere auch Benutzerprofileinstellungen und/oder Raseneigenschaftsdaten berücksichtigt werden. Beispielsweise kann für einen älteren Benutzer auf einem steilen Rasen eine geringere Flächenleistung ermittelt werden als für einen jüngeren Benutzer oder eine flache Rasenfläche.

Mittels der Mähzeitplanung (203) wird das Arbeitszeitfenster (TWO) bestimmt. Insbesondere wird die Startzeit (ST) so gesetzt, dass unter Berücksichtigung der erwarteten Arbeitsdauer (EDO) keine Überschneidungen mit Ausschlusszeiten (ET) entstehen. In einer besonders vorteilhaften Ausführungsform können auch mehrteilige Arbeitszeitfenster geplant werden.

Bei der Bestimmung des Arbeitszeitfensters (TWO), insbesondere der Mähzeitplanung (203), können Benutzereingaben (UID), Wetterdaten (WSD) und/oder Kalenderdaten (CSD) verarbeitet werden. Beispielsweise können aus diesen Daten statische und/oder dynamische Ausschlusszeiten bestimmt und/oder berücksichtigt werden.

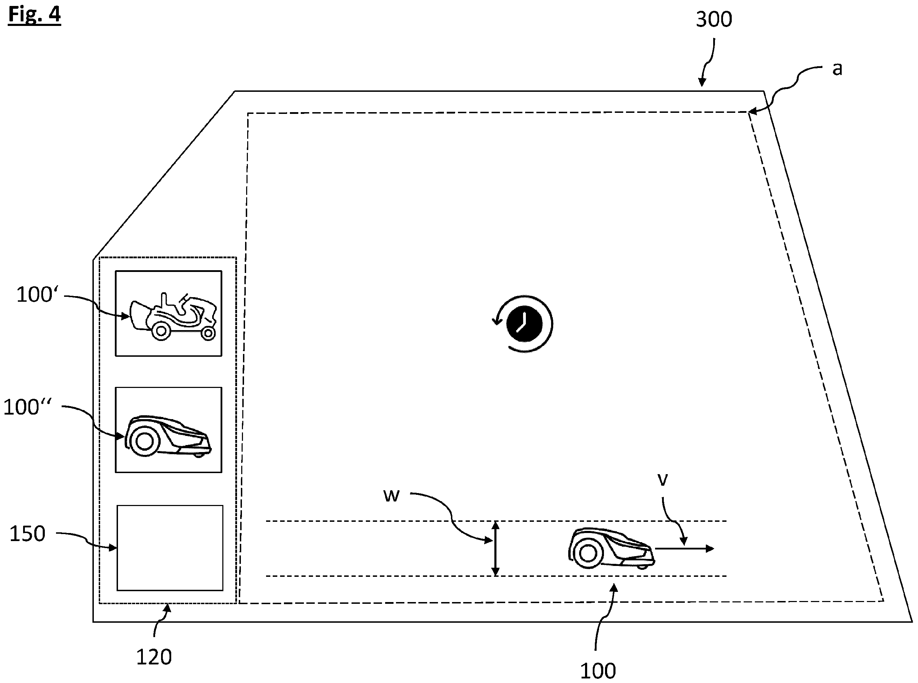

Figur 4 zeigt eine Rasenfläche (300) mit einer zu pflegenden Fläche (a). Die Rasenfläche (300) kann von einem oder mehreren Arbeitsgeräten (100, 100', 100") bearbeitet werden. Die Arbeitsgeräte können insbesondere als Flotte (120) gemeinsam für dieselbe Rasenfläche eingesetzt werden.
Bei der Bestimmung des Arbeitszeitfensters (TWO) für die Steuerung des Arbeitsgeräts (100) wir die erwartete Arbeitsdauer berücksichtigt. Hierdurch können die für das jeweilige Szenario relevanten Bedingungen, insbesondere Beschaffenheit der Rasenfläche und Konfiguration der eingesetzten Arbeitsgeräte) in die Planung einbezogen werden und damit die Planung verbessert.

Die Offenbarung umfasst mehrere Ausführungsformen, bei denen jeweils in allen möglichen Kombinationen Benutzereingabedaten (UID) und/oder Gerätekonfigurationsdaten (DCD) und/oder Raseneigenschaftsdaten (LCD) und/oder historische Mähdaten (HMD) und/oder Kalenderdaten (CSD) und/oder Wetterdaten (WSD) verarbeitet werden, die insbesondere jeweils von dem mobilen Arbeitsgerät (100) und/oder einem Sensorsystem in der Arbeitsumgebung, einer Benutzerschnittstelle, einer Datenbank, einem internen Dienst oder einem externen Dienst bereitgestellt werden können.

Die Benutzereingabedaten (UID) können mindestens eine der folgenden Informationen umfassen: Ausschlusszeiten (ET), Schwellgraswachstum (tgg), Mähmodus, Vorankündigungszeit für Benachrichtigungen, Benutzergeschwindigkeit.

Die Gerätekonfigurationsdaten (DCD) können mindestens eine der folgenden Informationen umfassen: Gerätekategorie, Mähstrategie, Schnittbreite (w), Arbeitsgeschwindigkeit (v), Speichervolumen des Auffangbehälters, Wendedauer, Energiekapazität, Ladezustand, verfügbare Mähmodi.

Die Raseneigenschaftsdaten (LCD) können mindestens eine der folgenden Informationen in Bezug auf die zu pflegende Rasenfläche (300) umfassen: Standort, Rasenfläche (a), Rasenflächenform, Bodentyp, Rasendichte, Rasenart, Rasensteigung, Rasentopografie, Bewässerungsintensität, Düngeintensität, Bodenfeuchte.

Die Wetterdaten (WSD) können mindestens eine der folgenden Informationen in Bezug auf die am Standort der Rasenfläche (300) zu erwartenden Wetterbedingungen umfassen: Temperatur, Niederschlag, Sonnenschein.

Die die Raseneigenschaftsdaten (LCD) und/oder die Wetterdaten (WSD) und/oder die Gerätekonfigurationsdaten (DCD) können zeitabhängige Größen sein.

Die Offenbarung umfasst neben den oben und in den Ansprüchen genannten Ausführungsformen auch folgende weitere Ausführungsformen:

Computerimplementiertes Verfahren nach einer der oben genannten Ausführungsformen, wobei eine Benachrichtigung für einen Benutzer über das ermittelte Arbeitszeitfenster (TWO) unter Berücksichtigung einer Vorankündigungszeit erzeugt wird.

Computerimplementiertes Verfahren nach einer der oben genannten Ausführungsformen, wobei die erwartete Arbeitsdauer (EDO) mit der Energiekapazität und/oder dem Ladezustand des Arbeitsgeräts (100) abgeglichen wird.

Computerimplementiertes Verfahren nach einer der oben genannten Ausführungsformen, wobei mindestens ein oder mehrere Arbeitszeitfenster (TWO) für eine Flotte (120) aus mehreren Arbeitsgeräten (100) ermittelt wird bzw. werden.

**Bezugszeichen**

| | | |
|---|---|---|
| 100 | mobiles Arbeitsgerät | mobile working device |
| 101 | Mähroboter | mowing robot |
| 102 | Traktor, Aufsitzmäher | tractor, riding mower |
| 103 | Rasenmäher | mower |
| 120 | Flotte | fleet |
| 150 | Station | station |
| 200 | Arbeitszeitfensterbestimmung | determination of time window for operation |
| 201 | Graswachstumssimulation | grass growth simulation |
| 202 | Arbeitsdauerschätzung | operation duration estimation |
| 203 | Mähzeitplanung | mowing scheduling |
| 300 | Rasenfläche | lawn |
| 401 | Steuerschnittstelle | control interface |
| 402 | Nachrichtenschnittstelle | message interface |
| TWO | Arbeitszeitfenster | time window for operation |
| ST | Startzeit | start time |
| EDO | erwartete Arbeitsdauer | expected duration of operation |
| SEP | Einzelschätzperiode | single estimation period |
| d1, d2 | Tag 1, Tag 2, ... | day 1, day 2, ... |
| gg | Graswachstum, je Periode | grass growth, per period |
| tgg | Schwellgraswachstum | threshold for grass growth |
| a | Rasenfläche | lawn area |
| v | Arbeitsgeschwindigkeit | operational speed |
| w | Schnittbreite | cutting width |
| ET | Ausschlusszeiten | exclusion times |
| EMT | frühester Mähzeitpunkt | earliest mowing time |
| AOP | Flächenleistung | Area operation performance |
| WSD | Wetterdaten | weather service data |
| UID | Benutzereingabedaten | user input data |
| DCD | Gerätekonfigurationsdaten | device configuration data |
| LCD | Raseneigenschaftsdaten | lawn characteristics data |
| HMD | historische Mähdaten | historic mowing data |
| CSD | Kalenderdaten | calendar service data |

## Patentansprüche

1. Computerimplementiertes Verfahren zur Ermittlung eines Arbeitszeitfensters (TWO) für ein mobiles Arbeitsgerät (100) zur Pflege einer bestimmten Rasenfläche (300), wobei das Arbeitszeitfenster (TWO) auf Basis einer Graswachstumssimulation (201) unter Berücksichtigung standortbezogener Wetterdaten (WSD) ermittelt wird, **dadurch gekennzeichnet, dass**
das ermittelte Arbeitszeitfenster (TWO) eine Startzeit (ST) und eine erwartete Arbeitsdauer (EDO) umfasst, wobei die erwartete Arbeitsdauer (EDO) mittels einer Arbeitsdauerschätzung (202) in Abhängigkeit von Raseneigenschaftsdaten (LCD) in Bezug auf die zu pflegende Rasenfläche (300) und in Abhängigkeit einer Flächenleistung (AOP) des mindestens einen Arbeitsgeräts (100) ermittelt wird.

2. Computerimplementiertes Verfahren nach Anspruch 1, wobei die Startzeit (ST) in Abhängigkeit des geschätzten Graswachstums seit einem vorangegangenen Mäheinsatz ermittelt wird.

3. Computerimplementiertes Verfahren nach Anspruch 1 oder 2, wobei ein frühester Mähzeitpunkt (EMT) für das zu ermittelnde Arbeitszeitfenster (TWO) bestimmt wird, insbesondere in Abhängigkeit eines Vergleichs des geschätzten Graswachstums mit einem Schwellgraswachstum (tgg).

4. Computerimplementiertes Verfahren nach einem der vorhergehenden Ansprüche, wobei die Flächenleistung (AOP) in Abhängigkeit von Gerätekonfigurationsdaten (DCD) in Bezug auf mindestens ein auf der Rasenfläche (300) eingesetztes Arbeitsgerät (100) und/oder in Abhängigkeit von Benutzereingabedaten (UID) ermittelt wird.

5. Computerimplementiertes Verfahren nach einem der vorhergehenden Ansprüche, wobei die Flächenleistung (AOP) auf der Basis eines oder mehrerer Flächenleistungsparameter, insbesondere aus Benutzereingabedaten (UID) und/oder aus Gerätekonfigurationsdaten (DCD) und/oder Raseneigenschaftsdaten (LCD), bestimmt wird.

6. Computerimplementiertes Verfahren nach einem der vorhergehenden Ansprüche, wobei die Flächenleistung (AOP) aus mindestens einer der folgenden Informationen bestimmt wird: Gerätekategorie, Mähstrategie, Schnittbreite (w), Arbeitsgeschwindigkeit (v), Speichervolumen des Auffangbehälters, Wendedauer, Energiekapazität, Ladezustand, verfügbare Mähmodi, gewählter Mähmodus, Benutzergeschwindigkeit, Rasenflächenform, Rasensteigung, Rasentopografie.

7. Computerimplementiertes Verfahren nach einem der vorhergehenden Ansprüche, wobei die Flächenleistung unter Berücksichtigung von Raseneigenschaftsdaten (LCD), insbesondere der Steigung und/oder der Topografie der Rasenfläche (300), bestimmt wird.

8. Computerimplementiertes Verfahren nach einem der vorhergehenden Ansprüche, wobei das Arbeitszeitfenster (TWO) mittels einer Mähzeitplanung (203) in Abhängigkeit der erwarteten Arbeitsdauer (EDO) und unter Berücksichtigung von Ausschlusszeiten (ET) geplant wird.

9. Computerimplementiertes Verfahren nach Anspruch 8, wobei die Ausschlusszeiten (ET), insbesondere statisch vorgegebene Zeiträume und/oder dynamisch berechnete Zeiträume, in Abhängigkeit von Benutzereingabedaten (UID) und/oder Kalenderdaten (CSD) und/oder Wetterdaten (WSD) bestimmt werden.

10. Computerimplementiertes Verfahren nach einem der vorhergehenden Ansprüche, wobei das Graswachstums (gg, gg', gg") je Einzelschätzperiode (SEP) geschätzt wird.

11. Computerimplementiertes Verfahren nach Anspruch 10, wobei das Graswachstum mit einer zeitlichen Auflösung von mehreren Einzelschätzperioden (SEP) je Tag (d1, d2, d3) geschätzt wird.

12. Computerimplementiertes Verfahren nach einem der vorhergehenden Ansprüche, wobei das ermittelte Arbeitszeitfenster (TWO) über eine Steuerschnittstelle (401) für die automatisierte Ansteuerung mindestens eines mobilen Arbeitsgeräts (100) bereitgestellt wird und/oder das ermittelte Arbeitszeitfenster (TWO) über eine Kommunikationsschnittstelle (402) für die Benachrichtigung eines Benutzers bereitgestellt wird.

13. Computerimplementiertes Verfahren nach einem der vorhergehenden Ansprüche, wobei ein mehrteiliges Arbeitszeitfenster (TWO) mit einer oder mehreren zeitlichen Unterbrechungen, insbesondere zur Überbrückung von Ausschlusszeiten (ET) und/oder Berücksichtigung von Wartungsmaßnahmen des mindestens einen Arbeitsgeräts (100), ermittelt wird.

14. Computersystem, das dazu ausgebildet ist, ein Verfahren nach einem der vorhergehenden Ansprüche auszuführen.

15. Computerprogramm, das dazu ausgebildet ist, auf einem Computer ein Verfahren nach einem der vorhergehenden Ansprüche auszuführen.
